# EUROPEAN PATENT APPLICATION

(11) **EP 1 455 260 A1**
(43) Date of publication of application: **08.09.2004**
(21) Application number: 03290542.4
(22) Date of filing: 06.03.2003
(51) Int. Cl.: G06F 1/18

(54) **Access control devices relating to data-processing systems, housings and sub-assemblies**

(71) Applicant: Hewlett-Packard Development Company, L.P., Houston, TX 77070 (US)
(72) Inventor: Boga, Helene, 38000 Grenoble (FR); Tezenas du montcel Cecile, 38100 Grenoble (FR); Helot, Jacques, 38000 Grenoble (FR)
(74) Representative: Lloyd, Richard Graham

(57) **Abstract**

A cover for a port of a computer sub-assembly, the cover being moveable between an operative position, in which access to the port is restricted, and an inoperative position in which access is not so restricted, the cover having a barrier part which, when the cover is in the operative position, serves to restrict said access, and a first engaging part operative, in cooperation with a second engaging part associated with the sub-assembly or housing, to hinder or prevent movement of the cover between the operative and inoperative positions.

## Description

### Background to the Invention and Summary of the Prior Art

This invention relates, in broad terms, to the general field of casings for data-processing devices such as computers and relates, more specifically, to data-processing devices in which sub-assemblies are removably receivable within an external case or housing. Such sub-assemblies shall hereinafter be referred to, for the sake of convenience, as sub-assemblies "of the kind specified".

A particularly pertinent example of such an arrangement, in the computer field, is Hewlett Packard's "e-pc" desktop product (www.hp.com/desktops/professional/e-pc), in which the conventional base unit components and circuitry are contained within a relatively small housing which, in use, can be located in a vertical orientation, behind a flat-panel screen, for example, in addition to the more usual horizontal position.

In order to facilitate assembly of such devices, it has been proposed to provide a sub-assembly within or in the form of a sliding drawer, in which are located the principal operating components of the computer system, such as the processor, motherboard, HDD (Hard Disk Drive), RAM circuitry and cooling apparatus, for example.

Whilst some computer systems of this type are provided with an external security device, whereby unauthorised access to I/O ports and drive bays, for example, can be restricted, such devices typically comprise relatively bulky "bolt-on" elements such as attachable panels, brackets or stands. In any event, such approaches do nothing to reduce the possibility of unauthorised access being obtained to front-mounted I/O ports such as USB ports, which are increasingly being provided on the fronts of such systems to provide users with a readily accessible means to connect peripheral devices such as joysticks, tracker balls and web cams.

Whilst it is known to provide flaps and access doors to cover otherwise exposed front-mounted USB ports, such approaches do nothing to prevent or effectively restrict access to such ports, which can give rise to serious security concerns, bearing in mind the risk of an unauthorised peripheral device being used to download sensitive information from a third party's computer or to upload unwanted information or viruses, for example. Similarly, whilst it is possible to block access to a particular USB port using the computer's BIOS, such approaches are not totally secure and, of course, leave the port inoperable to an authorised user, which may not be acceptable, in day-to-day use.

### Summary of the Invention

In accordance with a first aspect of the present invention, there is provided a housing for a data-processing device having a sub-assembly of the kind specified, the sub-assembly having a port, and a cover for the port, the cover being moveable between an operative position, in which access to the port is restricted, and an inoperative position, in which access is not so restricted, the cover having a barrier part which, when the cover is in the operative position, serves to restrict said access, and a first engaging part operative, in cooperation with a second engaging part associated with the sub-assembly or housing, to hinder or prevent movement of the cover between the operative and inoperative positions.

The sub-assembly may be slidably receivable within the housing and the second engaging part, being associated with one of said sub-assembly or housing, may serve, in use, to hold the first engaging part between it and the other of the sub-assembly or housing.

The first engaging portion may, in use, be clamped between the second engaging part and the other of said sub-assembly or housing.

The sub-assembly preferably is slidably receivable within the housing, with the first engaging part, in use, preferably being held between the second engaging part and a part of the housing.

The first engagement part may comprise a protrusion or recess cooperable with a recess or protrusion of the second engaging part.

Preferably, the first and second engaging parts are provided with a plurality of teeth whereby relative movement between them may be restricted or prevented.

Preferably, the cover is slidably engaged with a guide in the housing, sliding movement of the cover being restricted or prevented when the sub-assembly is fully received within the housing.

Conveniently, the sub-assembly is securable in position, such as by locking, relative to the housing.

The port may be a front-mounted USB port.

In accordance with a second aspect of the present invention, there is provided a computer system having a housing in accordance with the first aspect of the invention.

In accordance with a third aspect of the present invention, there is provided a computer system having a housing and a sub-assembly slidably receivable therewithin, the sub-assembly having a port for releasable connection of a peripheral device and the system being provided with a cover for the port whereby access to the port may be restricted, the cover having a barrier part and a first engaging part operative, in cooperation with a second engaging part associated with the sub-assembly or housing, to hinder or prevent movement of the cover between an operative position, in which access to the port is restricted, and an inoperative position, in which access is not so restricted.

Preferably, the cover, when the first and second engaging parts are not in cooperation, is slidably engaged with a guide in the housing.

Conveniently, the port is a front-mounted USB port.

The invention, in its third aspect, may comprise one or more of the features set out in relation to its first aspect.

In accordance with a fourth aspect of the present invention, there is provided a computer housing having a port cover moveable between an operative position, in which access to an I/O port is restricted and an inoperative position in which access is not so restricted, the cover having an engagement part cooperable with a removable sub-assembly so as to hinder or prevent movement of the cover between the two positions.

Preferably, the cover is slidably engaged with the housing, sliding movement being restricted or prevented by interaction of engaging portions of the cover and sub-assembly.

Preferably, the housing is adapted for releasable sliding reception of the sub-assembly.

The invention, in its fourth aspect, may comprise one or more of the features set out in the preceding paragraphs.

### Brief Description of the Drawings

Specific but non-limiting embodiments of the invention, in its various aspects, will now be described in greater detail, but strictly by way of example only, by reference to the accompanying drawings, of which:

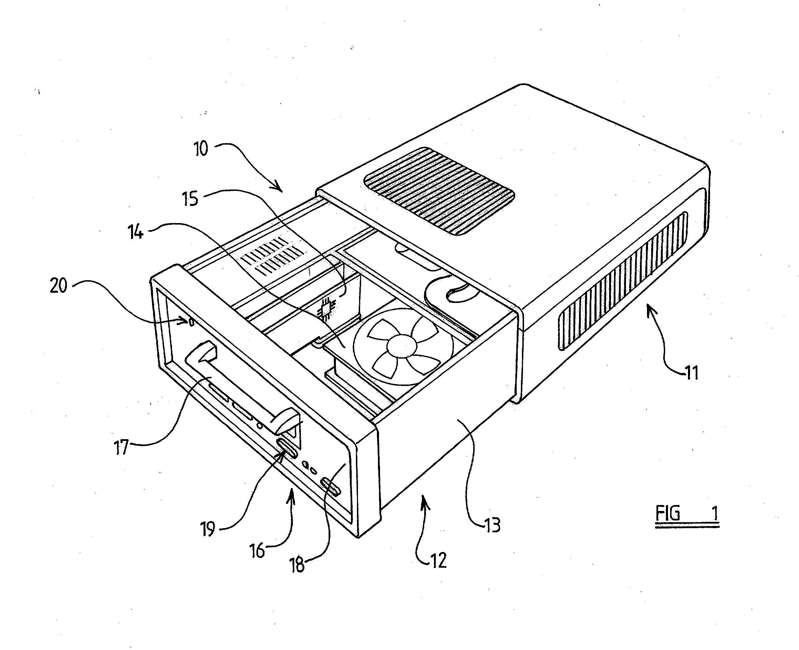

FIGURE 1 is a perspective view, from the rear and above, of a computer housing and sub-assembly;
FIGURE 2 is an exploded perspective view, from the front and above, of the housing and sub-assembly of Figure 1, showing the port cover of the present invention;
FIGURE 3 is a cut-away view, taken from above, showing engagement of the port cover and drawer of Figure 2, the cover being in an inoperative position;
FIGURE 4 is a somewhat similar view to that shown in Figure 3, with the cover being shown in an operative position; and
FIGURES 5 and 6 are perspective views of the housing and sub-assembly, in a vertical orientation, showing the cover of Figures 2, 3 and 4 in inoperative and operative positions.

### Detailed Description of the Drawings and Best Mode of the Invention

Referring to the Figures, a data-processing device in the form of a computer system 10 comprises a plastics housing 11 in which is slidably received a sub-assembly 12 in the form of a drawer 13, in which are located a number of processing and data input/output components such as a Hard Disk Drive (HDD) 14 and Printed Circuit Boards (PCB's) 15. The drawer 13 is provided, at its rear end 16, with an integral plastics handle 17 by which sliding movement into and out of the housing 11 may be effected. The rear face 18 of the sub-assembly is also provided with a number of indicating devices such as LED's 19, to indicate operation/activation of a number of the internal computer components. The sub-assembly 12 is also provided with a locking mechanism illustrated generally at 20, operative to secure the drawer 13 in relation to the housing 11, once the drawer has successfully been inserted therein. The locking mechanism 20 may be key-operated, in generally conventional manner.

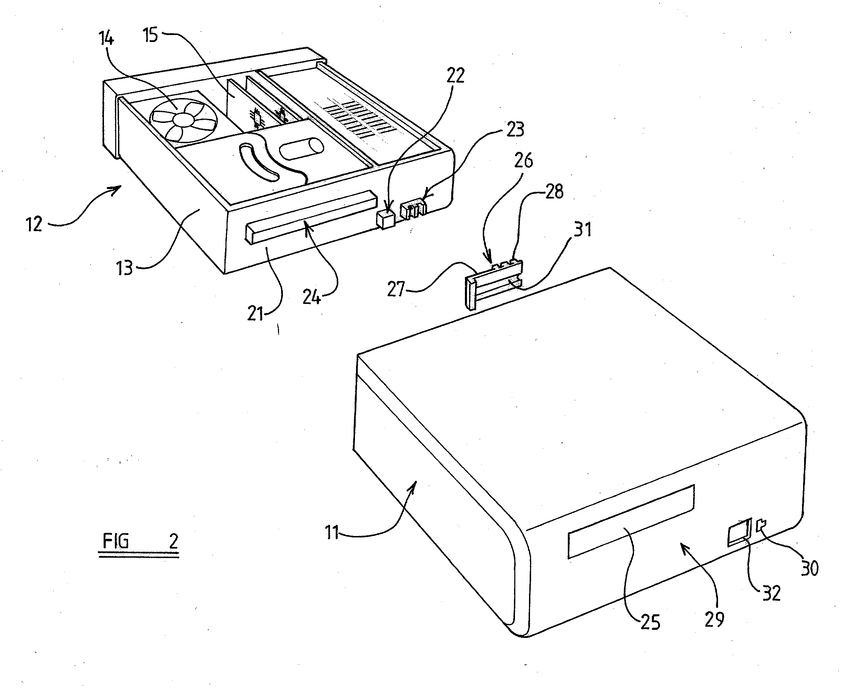

As shown in Figure 2, a front part 21 of the sub-assembly 12 is provided with a pair of USB (Universal Serial Bus) ports 22 and a toothed engaging part 23, whose function and purpose will hereinafter be described. The front part 21 is also provided, in this example, with a CD ROM/DVD bay 24, through which CD ROM/DVD software may be loaded, via a front mounted slot 25 in the housing 11.

The assembly shown in Figure 2 is also provided with a port cover 26 having a barrier part 27 and a toothed engaging part 28 operative, in use, to cooperate with the toothed engaging part 23 of the drawer, thus restricting sliding (i.e. sideways) movement of the cover relative to the drawer 13 and hence to the USB ports 22.

As shown schematically in Figure 2, an inwardly-facing surface of the front 29 of the housing is provided with a guide rail 30 engageable, conveniently in a snap-fitting manner, with a groove 31 provided in a forwardly-disposed surface of the cover 26. In the absence of any engagement between the cover 28 and the engaging part 23, the cover is free to move slidably in relation to the housing 11, with the barrier part 27 thus being able to adopt an inoperative position, in which it does not overlie a USB aperture 32 and an operative position in which it at least partially blocks this aperture.

It will thus be understood that, in the absence of the sub-assembly 13 from the housing 11, a user is able to select one of a plurality of (conveniently two) positions of the cover 26, thus dictating whether or not access will be provided to the USB ports 22 upon insertion of the sub-assembly 13 into the housing 11. It will also be understood, from this, that once the sub-assembly 13 is secured (e.g. locked) in position in relation to the housing, the engagement between the teeth of the cover 26 and the engaging part 23 makes it very difficult - if not impossible - for the position of the cover 26 thereafter to be altered, without removing the drawer 13 from the housing.

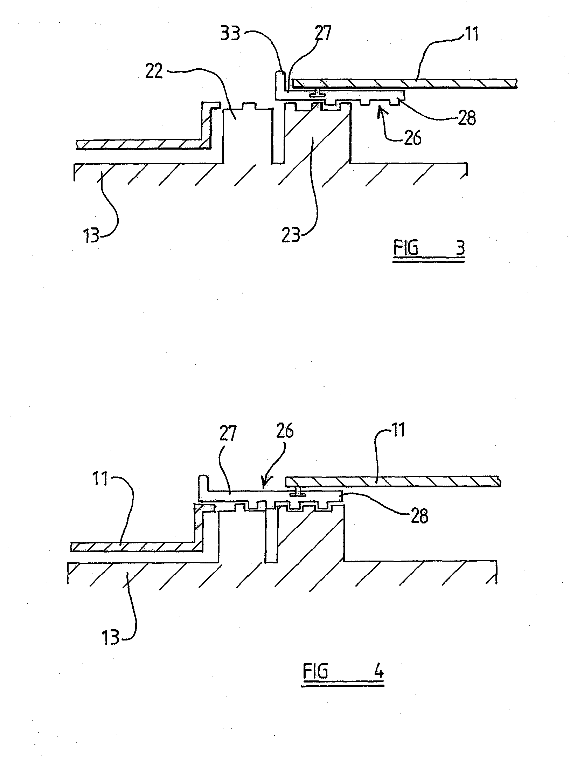

This is shown in more detail in Figures 3 and 4: in Figure 3, it can be seen that the cover 26 is provided with a grip element 33 in the form of an upturned formation, whereby a user may slide the cover 26 between the inoperative and operative positions hereinbefore described. What is shown in Figures 3 and 4, however, is that such sliding movement is not permitted when the sub-assembly 13 is fully inserted in the housing 11, as a result of the interaction between the teeth of the engaging parts 23 and 28 of the sub-assembly and cover respectively.

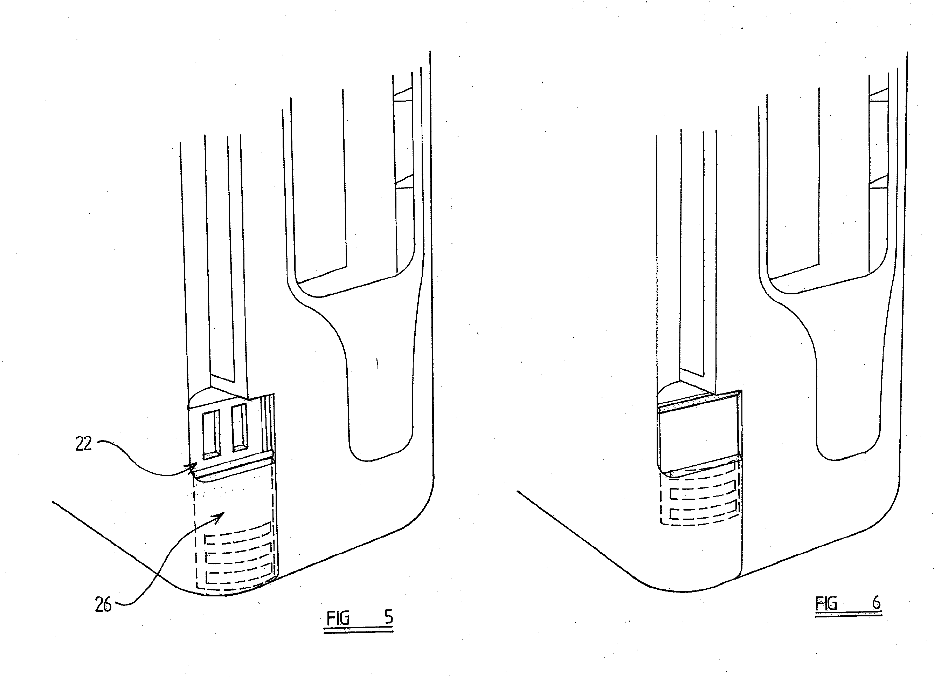

A somewhat more schematic illustration of this is provided in Figures 5 and 6, in which the overall assembly is shown in a generally standing orientation. As shown in Figure 5, when the cover 26 adopts its inoperative position, all that is visible externally is the grip element 33, with it thus being evident that the two USB ports 22 are available for use. On the other hand, Figure 6 shows that when the cover 26 adopts its operative position, the USB ports are completely concealed from view, thus not only preventing access thereto but also disguising the fact that the computer system is provided with any front-mounted USB ports at all.

Insofar as the operation of the cover 26 is concerned, it will be understood that alternative approaches are envisaged: thus, for example, the cover 26 may not necessarily be guided slidably relative to the front part 29 of the housing 11, but may instead be provided with an alternative "clip on" facility whereby the cover 26 may be releasably attached to the USB port 22 and attachment part 23, in the absence of any engagement with the housing 11. Suitably configured snap-fitting protrusions and recesses may thus be provided in the cover 26 and front part 21 of the sub-assembly 13.

What will be understood from the foregoing is that the present invention, in its various aspects, provides a number of security benefits by restricting unauthorised access to otherwise freely-exposed front-mounted USB ports (for example) with a release of the port cover only being possible in conjunction with a release of the drawer 13 from the housing 11. As, in many corporate environments, it is likely that relatively few, selected, personnel will be provided with an appropriate key to actuate the lock 20, this means that accessibility to the front-mounted USB ports can carefully be controlled. It will also be understood that the hardware needed to implement the invention is simple and inexpensive to produce, thus making the added security benefits attractive to cost-conscious purchasers.

It will be understood, by those well-versed in the relevant art, that the various aspects of the invention set out above may well find application in data-processing devices other than computer systems per se. Thus, it is envisaged that the housing and cover arrangements, for example, could be employed with smaller devices such as PDA's, digital cameras, palmtops and the like. Broadly speaking, where a requirement exists for a data processing device to be provided with an I/O port, the invention may be applicable in the general manner discussed above.

In the present specification "comprises" means "includes or consists of' and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A housing for a data-processing device having a sub-assembly of the kind specified, the sub-assembly having a port, and a cover for the port, the cover being moveable between an operative position, in which access to the port is restricted, and an inoperative position, in which access is not so restricted, the cover having a barrier part which, when the cover is in the operative position, serves to restrict said access, and a first engaging part operative, in cooperation with a second engaging part associated with the sub-assembly or housing, to hinder or prevent movement of the cover between the operative and inoperative positions.

2. A housing according to claim 1 wherein the sub-assembly is slidably receivable therewithin and wherein the second engaging part, being associated with one of said sub-assembly or housing, serves, in use, to hold the first engaging part between it and the other of the sub-assembly or housing.

3. A housing according to claim 2 wherein the first engaging part, in use, is clamped between the second engaging part and the other of said sub-assembly or housing.

4. A housing according to claim 1, claim 2 or claim 3 wherein the sub-assembly is slidably receivable therewithin and wherein the first engaging part, in use, is held between the second engaging part and a part of the housing.

5. A housing according to claim 4 wherein the first engaging part, in use, is clamped between said parts.

6. A housing according to any one of the preceding claims wherein the first engaging part comprises a protrusion or recess cooperable with a recess or protrusion of the second engaging part.

7. A housing according to any one of the preceding claims wherein the first and second engaging parts are provided with a plurality of teeth whereby relative movement between them may be restricted or prevented.

8. A housing according to any one of the preceding claims wherein the cover is slidably engaged with a guide in the housing, sliding movement of the cover being restricted or prevented when the sub-assembly is fully received within the housing.

9. A housing according to any one of the preceding claims wherein the sub-assembly is securable in position relative to the housing.

10. A housing according to any one of the preceding claims wherein the port is a front-mounted USB port.

11. A computer system having a housing according to any one of the preceding claims.

12. A computer system having a housing and a sub-assembly slidably receivable therewithin, the sub-assembly having a port for releasable connection of a peripheral device and the system being provided with a cover for the port whereby access to the port may be restricted, the cover having a barrier part and a first engaging part operative, in cooperation with a second engaging part associated with the sub-assembly or housing, to hinder or prevent movement of the cover between an operative position, in which access to the port is restricted, and an inoperative position, in which access is not so restricted.

13. A computer system according to claim 12 wherein the cover, when the first and second engaging parts are not in cooperation, is slidably engaged with a guide in the housing.

14. A computer system according to claim 12 or claim 13 wherein the port is a front-mounted USB port.

15. A computer housing having a port cover moveable between an operative position, in which access to an I/O port is restricted, and an inoperative position in which access is not so restricted, the cover having an engagement part cooperable with a removable sub-assembly so as to hinder or prevent movement of the cover between the two positions.

16. A computer housing according to claim 15 wherein the cover is slidably engaged with the housing, sliding movement being restricted or prevented by interaction of engaging portions of the cover and sub-assembly.

17. A computer housing according to claim 15 or claim 16 wherein the housing is adapted for releasable sliding reception of the sub-assembly.
